# EUROPEAN PATENT SPECIFICATION

(11) **EP 4 024 159 B1**
(45) Date of publication and mention of the grant of the patent: **23.07.2025**
(21) Application number: 21187837.6
(22) Date of filing: 27.07.2021
(51) Int. Cl.: G06F 1/16, H04M 1/72409, A44C 5/00, H02J 7/00, H01R 13/02, H04B 1/3827, H04M 1/04

(54) **WEARABLE DEVICE AND CONTROL METHOD OF WEARABLE DEVICE**
AM KÖRPER TRAGBARE VORRICHTUNG UND STEUERVERFAHREN FÜR AM KÖRPER TRAGBARE VORRICHTUNG
DISPOSITIF PORTABLE ET PROCÉDÉ DE COMMANDE D'UN DISPOSITIF PORTABLE

(30) Priority: 04.01.2021 CN 202110001253
(43) Date of publication of application: 06.07.2022
(73) Proprietor: Beijing Xiaomi Mobile Software Co., Ltd., Beijing 100085 (CN)
(72) Inventor: XU, Wei, Beijing 100085 (CN); HUANG, Zhang, Beijing 100085 (CN)
(74) Representative: dompatent von Kreisler Selting Werner - Partnerschaft von Patent- und Rechtsanwälten mbB

(56) References cited:
- CN-A- 104 578 301
- CN-U- 210 353 489
- US-A1- 2017 346 319
- US-A1- 2018 314 669

## Description

### BACKGROUND

With the popularization of electronic devices and people's yearning for intelligent life, wearable devices have been more and more widely used. Wearable devices are portable and beautiful, and gradually integrate functions such as watches, phones, payment, heart rate, sports, etc., and are deeply favored by people. US20180314669A1 discloses a wearable device which includes a device carrier, a device core unit, a first universal serial bus (USB) interface, a second USB interface, and a signal path selection unit. CN104578301A discloses an intelligent wearable device which comprises an intelligent body and a wearing connecting piece. The intelligent body is provided with a charging management circuit and a charging switching circuit. The wearing connecting piece is provided with a charging circuit connected with the charging switching circuit and an electric connector matched with the charging circuit. The charging management circuit is used for receiving a user instruction, controlling the charging switching circuit to switch charging modes of the charging circuit and setting the charging current under the charging modes. The charging switching circuit is used for receiving the control of the charging management circuit and processing the charging circuit switching.

### SUMMARY

The present disclosure generally relates to the technical field of electronic devices, and more specifically to a wearable device and a control method of the wearable device.

According to a first aspect of the present disclosure, there is provided a wearable device, as defined in claim 1.

Optionally, when the first interface is connected to a third terminal device and the second interface is connected to a fourth terminal device, the third terminal device and the fourth terminal device perform data transmission via the wearable device.

Optionally, the wearable device further includes a conductive portion on the wristband, and the first interface is connected to the charging stand of the main body through the conductive portion.

Optionally, the wearable device further includes: a first charging line, which is in the first section of wristband, with one end of the first charging line being connected to a power supply pin of the first interface, and the other end being connected to the conductive portion; and a second charging line, in the second section of wristband, with one end of the second charging line being connected to the conductive portion, and the other end being connected to the second interface.

Optionally, the wearable device further includes: a transmission line, located in the wristband, with one end of the transmission line being connected to a data transmission pin of the first interface, and the other end being connected to the second interface.

Optionally, the first interface includes a first pin, a second pin, a third pin, and a fourth pin; the first pin is used to connect to a power supply; the second pin and the third pin are used for data transmission; and the fourth pin is used for grounding; wherein, one end of the first charging line is electrically connected to the first pin and the fourth pin, respectively; and one end of the transmission line is electrically connected to the second pin and the third pin, respectively.

Optionally, the first interface is a Type-A interface; and the second interface is a Type-C interface.

Optionally, the first interface and the second interface are both universal serial bus interfaces.

Optionally, the first section of wristband has a first protective sleeve; the second section of wristband has a second protective sleeve; and when the first section of wristband and the second section of wristband are fixedly connected, the second protective sleeve is sleeved with the first interface, and the first protective sleeve is sleeved with the second interface.

Optionally, a plurality of fixing apertures are provided in one of the first section of wristband and the second section of wristband, and a buckle is provided in the other of the first section of wristband and the second section of wristband, and the buckle can buckle the fixing apertures to fixedly connect the first section of wristband and the second section of wristband.

According to a second aspect of the present disclosure, there is provided a control method of a wearable device, applied to the wearable device of the first aspect of the disclosure, the control method comprising: obtaining connection information of the first interface and connection information of the second interface; determining a working mode of the wearable device according to the connection information of the first interface and the second interface, wherein the working mode includes at least one of the following: charging the main body through the power supply; charging a second terminal device via the wearable device through a power adapter; and performing, by a third terminal device and a fourth terminal device, data transmission through the wearable device.

Optionally, obtaining connection information of the first interface and connection information of the second interface comprises: detecting a micro-current of the first interface and a micro-current of the second interface; determining the connection information of the first interface according to the micro-current of the first interface; and determining the connection information of the second interface according to the micro-current of the second interface.

Optionally, determining the working mode of the wearable device according to the connection information of the first interface and the second interface comprises: when the connection information of the first interface is that the first interface is connected to a power supply, and the connection information of the second interface is that the second interface is not connected to a first terminal device, determining that the working mode is charging the main body through the power supply.

Optionally, determining the working mode of the wearable device according to the connection information of the first interface and the connection information of the second interface comprises: when the connection information of the first interface is that the first interface is connected to the first terminal device or a power adapter, and the second interface is not connected to the first terminal device, determining that the working mode is that the main body of the bracelet is charged through the first terminal device or the power adapter; and when the connection information of the first interface is that the first interface is connected to a power adapter, and the second interface is connected to the second terminal device, determining that the working mode is that the second terminal device is charged via the wearable device through the power adapter; and when the first interface is connected to the third terminal device and the second interface is connected to the forth terminal device, the third terminal device and the forth terminal device perform data transmission through the wearable device.

It is to be understood that both the aforementioned general description and the following detailed description are exemplary and explanatory only and are not restrictive of the present disclosure.

### BRIEF DESCRIPTION OF THE DRAWINGS

The accompanying drawings, which are incorporated in and constitute a part of this disclosure, illustrate embodiments consistent with the disclosure and, together with the description, serve to explain the principles of the disclosure.
FIG. 1 is a schematic diagram showing the structure of the wearable device according to some embodiments of the present disclosure.
FIG. 2 is a schematic diagram showing the structure of a wristband of the wearable device according to some embodiments of the present disclosure.
FIG. 3 is a schematic diagram showing the line connection of the wearable device according to some embodiments of the present disclosure.
FIG. 4 is an enlarged schematic diagram showing a part of the circuit in FIG. 3 according to some embodiments of the present disclosure.
FIG. 5 is a schematic diagram showing the structure of the wearable device when being worn according to some embodiments of the present disclosure.
FIG. 6 is a flowchart of a control method of a wearable device according to some embodiments of the present disclosure.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise indicated. The embodiments set forth in the following description of exemplary embodiments do not represent all embodiments consistent with the disclosure. Instead, they are merely examples of apparatuses and methods consistent with aspects related to the disclosure as recited in the appended claims.

At present, most wearable devices have the specificity of charging, and when charging, they use their own charging stand and a matching charging base for charging. Specifically, when the wearable device needs to be charged, the wristband of the bracelet is manually removed, and then the main body of the bracelet is placed on a dedicated charging base for charging, which has poor portability and user experience.

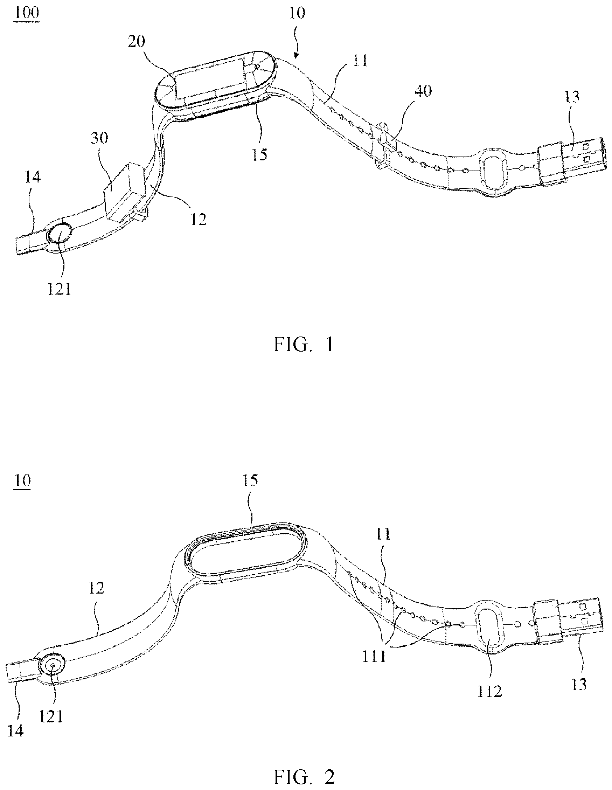

FIG. 1 is a schematic diagram showing the structure of the wearable device according to some embodiments of the present disclosure. FIG. 2 is a schematic diagram showing the structure of a wristband of the wearable device according to some embodiments of the present disclosure.

The wearable device of the present disclosure may be an electronic product such as a smart bracelet or a smart watch. In the following description, a smart bracelet is taken as an example, but it is not limited thereto.

As shown in FIGS. 1 and 2, the wearable device 100 of the embodiments of the present disclosure includes a wristband 10 and a main body.

The wristband 10 includes a first section of wristband 11 and a second section of wristband 12. The first section of wristband 11 and the second section of wristband 12 can be used to wear the wearable device 100 on the user's wrist. The first section of wristband 11 is provided with a first interface 13 for connecting to a power supply. The power supply may be a power adapter that matches the wearable device, and the wearable device is charged through the power adapter. The power supply may also be the first terminal device, and the wearable device is charged through the charging interface of the first terminal device. The second section of wristband 12 is provided with a second interface 14 for connecting with the first terminal device. The type of the first interface 13 may be matched with the socket type of the power adapter or the socket type of the first terminal device, such that the first interface 13 can be connected to the power adapter or the first terminal device for electrical conduction. The type of the second interface 14 can match the socket type of the first terminal device, such that the second interface 14 is connected to the first terminal device for electrical conduction.

The first terminal device may be an electronic device with a connection interface such as a mobile phone, a tablet computer, a notebook computer, a desktop computer, a personal digital assistant (PDA), etc.

The first section of wristband 11 and the second section of wristband 12 may be long strips, and the length of the first section of wristband 11 may be longer than or equal to the length of the second section of wristband 12, or the length of the second section of wristband 12 is longer than or equal to the length of the first section of wristband 11. In addition, the first section of wristband 11 and the second section of wristband 12 can be made of flexible materials such as leather, polyvinyl chloride (PVC), rubber, thermoplastic polyurethane (TPU), or silicone.

The main body may be a main body 20 of the bracelet or a main body of a watch. Taking the main body 20 of the bracelet as an example, the main body 20 of the bracelet is provided on the wristband 10 and is electrically connected to the first interface 13 and the second interface 14. The outer shape of the main body 20 of the bracelet may be an oval shape, a rectangular shape, a square shape, a circular shape or other shapes. The main body 20 of the bracelet may include a housing, a display panel fixed on the housing, and a chip, a circuit board, a rechargeable battery, etc., provided in the housing. The display panel, chip, and rechargeable battery are all electrically connected to the circuit board.

The display panel is used to display time, date, or other information. The chip is used to detect and identify the connection state of the first interface 13 and the second interface 14 and control the connection mode of the wearable device 100. For example, the chip can detect the current flowing into the first interface 13, and when the first interface 13 is connected to other devices, it will receive the micro-current, but devices are not connected, it will not receive the micro-current. Moreover, the micro-current chip determines what type of device the connected device is based on the predetermined protocol, for example, a terminal device or a power adapter, in order to determine the connection mode of the wearable device.

The rechargeable battery is used to supply power to the main body 20 of the bracelet and can be electrically connected to the first interface 13 through a charging stand exposed outside the main body 20 of the bracelet. The rechargeable battery can be a small battery such as a lithium-ion battery, a lithium polymer battery, a nickel-cadmium battery, a nickel-metal hydride battery, a nickel-zinc battery and other small batteries.

Herein, when the first interface 13 is connected to the power supply and the second interface 14 is not connected to the first terminal device, the main body is charged through the power supply.

The power supply includes a power adapter, and when the first interface 13 is connected to the power adapter and the second interface 14 is not connected to the first terminal device, the main body is charged through the power adapter.

In another example, the power supply may be a fifth terminal device, and when the first interface 13 is connected to the fifth terminal device and the second interface 14 is not connected to the first terminal device, the main body is charged through the fifth terminal device.

In other words, in the embodiments of the present disclosure, when the second interface 14 is not connected to the terminal device, the main body of the wearable device 100 can be charged through the power adapter or through the fifth terminal device.

Herein, the first terminal device and the fifth terminal device may be collectively referred to as terminal devices. In addition, the types of the first terminal device and the fifth terminal device can be the same or different.

In the present disclosure, by providing two interfaces on the wristband of the wearable device 100, in a state in which one interface is connected to the power supply and the other interface is not connected to the terminal device, the wearable device 100 charges itself through the interface connected to the power supply without using a dedicated charging base, making charging is more convenient.

In some embodiments, the power supply includes a power adapter, and when the first interface 13 is connected to the power adapter and the second interface 14 is connected to the second terminal device, the second terminal device is charged through the power adapter via the wearable device 100.

For the wearable device 100 of the embodiments of the present disclosure, the power adapter charges the terminal device via the wearable device 100, that is, the wearable device 100 is used as a power charging line to charge the terminal device to be charged. In the case that the user forgets, loses the charging line, or the charging line is damaged, the wearable device 100 can serve as the charging line of the power adapter to charge the terminal device to be charged for emergency use, which has great convenience.

In another embodiment, when the first interface 13 is connected to the third terminal device and the second interface 14 is connected to the fourth terminal device, the third terminal device and the fourth terminal device perform data transmission through the wearable device 100.

The two interfaces are connected respectively to one terminal device, and the wearable device 100 serves as the data line of the two terminal devices to realize the data transmission function between the two terminal devices such that when the user forgets or loses the data line, the wearable device 100 can be used as an emergency, which greatly improves the convenience.

When the wearable device 100 of the present disclosure is in use, if the rechargeable battery inside the wearable device 100 is insufficient and needs to be charged, the wristband 10 is removed from the wrist, and then the first interface 13 on the first section of wristband 11 is connected to the socket of the power adapter, or the first interface 13 is connected to the socket of the fifth terminal device, and, the second interface 14 on the second section of wristband 12 is not connected to the first terminal device. At this time, the chip in the main body 20 of the bracelet determines that the wearable device 100 is in a self-charging mode, and the first interface 13 is connected with the rechargeable battery, thereby charging the wearable device 100 through the power adapter or the fifth terminal device. Compared with the traditional method in which the main body 20 of the bracelet is disassembled and then placed in a matching charging dock for charging, the disclosed wearable device 100 can charge the wearable device without disassembling the main body when charging itself, thus improving the convenience. In addition, when the first interface 13 is connected to the fifth terminal device, and the second interface 14 is not connected to the first terminal device, the wearable device 100 can also perform data transmission with the connected fifth terminal device, for example, the data on the fifth terminal device can be transmitted to the wearable device 100 for storage, or the data on the wearable device 100 can be transmitted to the fifth terminal device for data synchronization.

In addition, when the terminal device to be charged (the second terminal device) needs to be charged, the first interface 13 on the first section of wristband 11 is plugged into the power adapter, and the second interface 14 on the second section of wristband 12 is plugged into the terminal device to be charged. At this time, the chip in the main body 20 determines that the wearable device 100 is in a terminal device charging mode, and the first interface 13 is electrically conducted with the second interface 14, such that the terminal device to be charged is charged through the power adapter via the wearable device 100. The wearable device 100 is used as the power charging line to charge the terminal device to be charged. When the user forgets, loses or damages the charging line, the wearable device 100 can serve as the charging line of the power adapter to charge the terminal device to be charged for emergency use, which has great convenience.

Furthermore, when two terminal devices (the third terminal device and the fourth terminal device) need to perform data transmission, the first interface 13 on the first section of wristband 11 is plugged into the socket of one terminal device (for example, the third terminal device), and the second interface 14 on the second section of wristband 12 is plugged into the socket of the other terminal device (for example, the fourth terminal device), the chip in the main body 20 of the mobile phone determines that the wearable device 100 is in a data transmission mode between the terminal device and the terminal device, and the first interface 13 is electrically conducted with the second interface 14, such that the two terminal devices perform data transmission through the wearable device 100. By using the wearable device 100 as a data line, the data transmission function between two terminal devices is realized, and if the user forgets or loses the data line, the wearable device 100 can be used in emergency, which greatly improves the convenience.

The above-mentioned first terminal device, second terminal device, third terminal device, fourth terminal device, and fifth terminal device may be collectively referred to as terminal devices. Herein, the types of the terminal devices may be the same or different.

To sum up, the wearable device 100 of the present disclosure is provided with interfaces on the two sections of the wristband, which can realize various modes such as self-charging of the wearable device 100, charging of the terminal device using the wearable device 100 as a charging line, and data transmission between the two terminal devices using the wearable device 100 as a data line without increasing the volume of the wristband body 20, to achieve a variety of functions, which greatly improves the convenience of users and enhances the user experience.

In some embodiments, the wearable device 100 further includes a conductive portion provided on the wristband, and the first interface is connected to the charging stand of the main body through the conductive portion. For example, the wristband 10 may also include a mounting base 15, and the first section of wristband 11 and the second section of wristband 12 are respectively connected to opposite ends of the mounting base 15. The main body 20 of the bracelet is detachably provided on the mounting base 15, and a conductive portion, such as a metal sheet 19, is provided in the mounting base 15, which is in contact with the charging stand of the main body 20 of the bracelet and is electrically connected to the first interface 13. Wherein, the charging stand is electrically connected with the rechargeable battery in the main body 20 of the bracelet, and the connection and disconnection between the charging stand and the rechargeable battery can be controlled through the chip. The metal sheet 19 can be embedded in the mounting base 15, and part of the metal sheet 19 is exposed outside the mounting base, such that the exposed part is in contact with the charging stand on the main body 20 of the bracelet for electrical connection. The metal sheet 19 may be a conductive material such as a copper sheet, an aluminum sheet, a silver sheet, a gold sheet, etc.

The metal sheet 19 is in contact with the charging stand of the main body 20 of the bracelet, such that the main body 20 of the bracelet can be easily detached and installed from the mounting base 15, which is convenient for users or workers to repair and replace the main body 20 of the bracelet. In an example, the first section of wristband 11 may be formed by extending from one end of the mounting base 15, and the second section of wristband 12 may be formed by extending from the other end of the mounting base 15, that is, the first section of wristband 11, the second section of wristband 12 and the mounting base 15 may be integrally formed. Wherein, the first interface 13 may be provided at the end of the first section of wristband 11. The second interface 14 may be provided at the end of the second section of wristband 12. However, it is not limited thereto, the first section of wristband 11 and the second section of wristband 12 may be detachably connected to opposite ends of the mounting base 15, respectively.

The mounting base 15 may have a groove and a frame provided around the groove, and a buckle may be provided on the inner side wall of the frame. A slot corresponding to the buckle may be provided on the outer side wall of the casing of the main body 20 of the bracelet. The main body 20 of the bracelet is fixed in the groove of the mounting base 15 through the buckle and the slot. The shape of the groove can be an oval shape, a rectangle shape, a square shape, a circle shape or other shapes that match the shape of the main body of the bracelet.

In another example, the wearable device 100 may not include the mounting base 15, and the main body 20 of the bracelet may be integrally formed with the wristband.

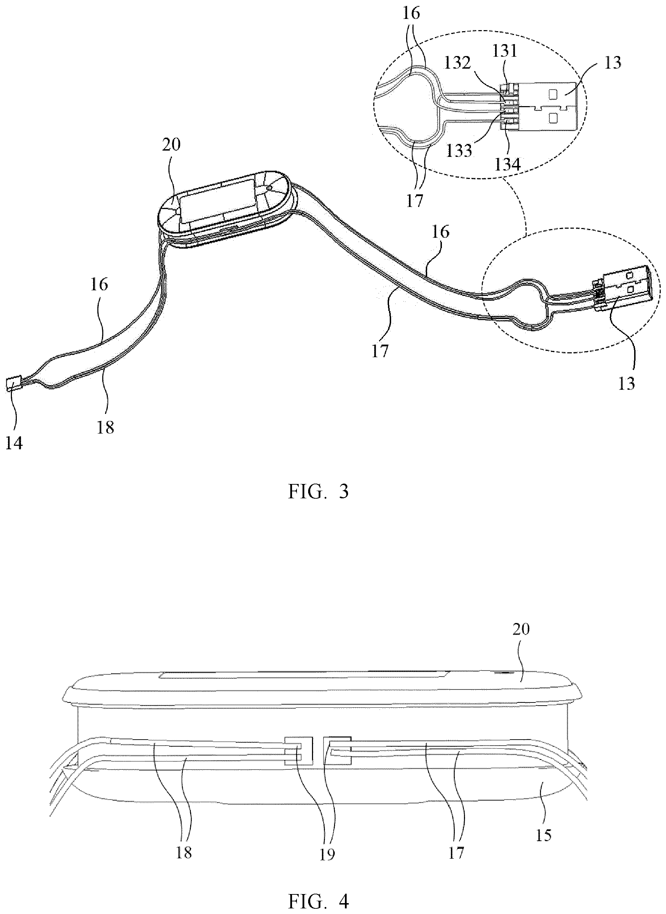

FIG. 3 is a schematic diagram showing the line connection of the wearable device according to some embodiments of the present disclosure. FIG. 4 is an enlarged schematic diagram showing a part of the circuit in FIG. 3 according to some embodiments of the present disclosure.

In some embodiments, as shown in FIGS. 3 and 4, the wearable device 100 further includes a first charging line 17 and a second charging line 18. The first charging line 17 is provided in the first section of wristband 11, and one end of the first charging line 17 is connected to the power supply pin of the first interface 13, and the other end is connected to a conductive portion, such as a metal sheet 19, so as to form a charging loop of the wearable device 100; and the second charging line 18 is provided in the second section of wristband 12, and one end of the second charging line 18 is connected to the metal sheet 19, and the other end is connected to the second interface 14, thereby forming a charging loop of the terminal device.

In a case that the wearable device 100 needs to be charged, the wristband 10 is removed from the wrist, and then the first interface 13 on the first section of wristband 11 is connected to the socket of the power adapter or the socket of the terminal device, and the second interface 14 on the second section of wristband 12 is not connected to the terminal device. At this time, the chip in the main body 20 of the bracelet controls the charging stand in contact with the metal sheet 19 so it is electrically conducted with the rechargeable battery, forming a charging loop to charge the rechargeable battery in the main body 20 of the bracelet.

In a case that the terminal device to be charged needs to be charged, the first interface 13 on the first section of wristband 11 is connected to the socket of the power adapter, and the second interface 14 on the second section of wristband 12 is connected to the socket of the terminal device to be charged. At this time, the first charging line 17 and the second charging line 18 are connected through the metal sheet 19, such that the first interface 13 is conducted with the second interface 14. The chip in the main body 20 of the mobile phone controls the charging stand in contact with the metal sheet 19 to be disconnected from the rechargeable battery, that is, the charging loop of the wearable device 100 itself is disconnected, the wearable device 100 enters the terminal device charging mode, and the terminal device to be charged is charged through the power adapter via the wearable device 100.

In some embodiments, the wearable device 100 further includes a transmission line 16 provided in the wristband 10, and one end of the transmission line 16 is connected to the data transmission pin of the first interface 13, and the other end is connected to the second interface 14. One end to the other end of the transmission line 16 can be successively embedded in the first section of wristband 11, the mounting base 15 and the second section of wristband 12 to hide the transmission line 16 in the wristband 10.

When two terminal devices need to perform data transmission, the first interface 13 on the first section of wristband 11 is connected to the socket of one terminal device, the second interface 14 on the second section of wristband 12 is connected to the socket of the other terminal device, and the chip in the main body 20 of the mobile phone determines that the wearable device 100 is in a data transmission mode between the terminal device and the terminal device. At this time, the chip disconnects the communication loop between the first interface 13 and the rechargeable battery, such that the two terminal devices perform data transmission through the transmission line 16 of the wearable device 100.

In some embodiments, the first interface 13 includes a first pin 131, a second pin 132, a third pin 133, and a fourth pin 134. The first pin 131 is used to connect to a power supply; the second pin 132 and the third pin 133 are used for data transmission; and the fourth pin 134 is used for grounding, wherein, one end of the first charging line 17 is electrically connected to the first pin 131 and the fourth pin 134 respectively; and one end of the transmission line 16 is electrically connected to the second pin 132 and the third pin 133, respectively. Wherein, there may be two first charging lines 17, where one charging line may be welded to the first pin 131 by welding, and the other charging line may be welded to the fourth pin 134 by welding. There may be two transmission lines 16, where one transmission line may be welded to the second pin 132 by welding, and the other transmission line is welded to the third pin 133.

In some embodiments, the first interface 13 and the second interface 14 are both universal serial bus (USB) interfaces to accommodate the connection of most power adapters and terminal devices. Herein, Mini USB, Micro USB, Type-A interface, and Type-C interface are included.

In some embodiments, a plurality of fixing apertures 111 is provided on the first section of wristband 11, and a watch buckle 121 is provided on the second section of wristband 12. The watch buckle 121 can buckle any one of the fixing apertures 111, such that the first section of wristband 11 and the second section of wristband 12 are fixedly connected, even if the first section of wristband 11 and the second section of wristband 12 are tied together. A plurality of fixing apertures 111 can be provided at intervals along the length direction of the first section of wristband 11, and the fixing apertures 111 provided at intervals can adjust the wear length by inserting the watch buckle 121 into different fixing apertures 111 according to the thickness of the wrist of different users. The shape of the fixing aperture 111 may be a circle shape, a bar shape, a triangle shape or other shapes, and correspondingly, the shape of the watch buckle 121 may also be a circle shape, a bar shape, a triangle shape or other shapes. In another example, a plurality of fixing apertures may be provided on the second section of wristband 12, and a watch buckle can be correspondingly provided on the first section of wristband 11.

In addition, the first section of wristband 11 can also be provided with a perforation extending in its width direction, where the perforation is provided adjacent to the fixing aperture 111, and the second section of wristband 12 can pass through the perforation, such that a part of the first section of wristband 11 overlaps a part of the second section of wristband 12.

In some embodiments, the first section of wristband 11 is provided with a first protective sleeve 40, the second section of wristband 12 is provided with the second protective sleeve 30, and when the first section of wristband 11 and the second section of wristband 12 are fixedly connected, the second protective sleeve 30 can be sleeved with the first interface 13, and the first protective sleeve 40 can be sleeved with the second interface 14. The material of the first protective sleeve 40 and the second protective sleeve 30 may be the same as that of the first section of wristband 11 and the second section of wristband 12, for example, they may be made of flexible materials such as leather, polyvinyl chloride (PVC), rubber, thermoplastic polyurethane (TPU), silicone, etc.

Through the arrangement of the first protective sleeve 40 and the second protective sleeve 30, when the wearable device is worn, the first interface 13 and the second interface 14 can be hidden, which improves the overall aesthetics of the wearable device 100, and can also prevent the first interface 13 and the second interface 14 from being exposed to the air and being corroded. In addition, the first protective sleeve 40 and the second protective sleeve 30 are respectively sleeved with the first interface 13 and the second interface 14, and can also be used to fix the extra part of the first section of wristband 11 and the second section of wristband 12 which are overlapped after wearing the wearable device 100.

In some embodiments, the first protective sleeve 40 can slide along the length direction of the first section of wristband 11, and the second protective sleeve 30 can slide along the length direction of the second section of wristband 12. For example, the first protective sleeve 40 is provided with a first collar, the first collar is sleeved on the first section of wristband 11, and the second protective sleeve 30 is provided with a second collar, and the second collar is sleeved on the second section of wristband 12. In this way, when the wearable device is worn to adjust the wearing length of the wristband, the first protective sleeve 40 and the second protective sleeve 30 can be adjusted according to the different positions of the first interface 13 and the second interface 14 when the wearable device 100 is worn, so as to better fit the first interface 13 and the second interface 14.

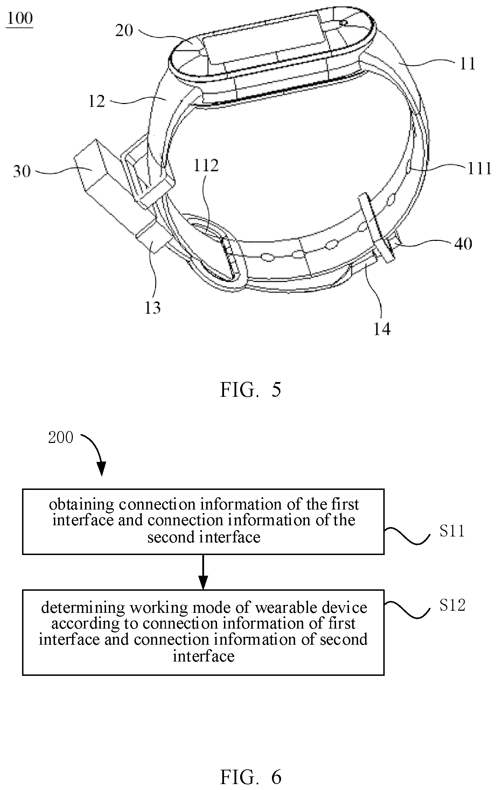

FIG. 5 is a schematic diagram showing the structure of the wearable device when being worn according to some embodiments of the present disclosure. As shown in FIG. 5, when the user needs to wear the wearable device 100 on the wrist, firstly, the mounting base 15 of the wristband 10 is in contact with the wrist, next, the second section of wristband 12 passes through the perforation 112 on the first section of wristband 11, such that a part of the first section of wristband 11 and a part of the second section of wristband 12 overlap and stick together to enable the first section of wristband 11 and the second section of wristband 12 to wrap around the wrist, further, the length of the overlapping part of the first section of wristband 11 and the second section of wristband 12 is adjusted appropriately to adjust the tightness, subsequently, the watch buckle 121 is buckled into the corresponding fixing aperture 111, to enable the first section of wristband 11 and the second section of wristband 12 to be fixedly connected, and finally, the second protective sleeve 30 is adjusted according to the position of the first interface 13 to sleeve the first interface 13, and the first protective sleeve 40 is adjusted according to the position of the second interface 14 to sleeve the second interface 14, such that the first interface 13 and the second interface 14 are hidden, and at the same time, the extra part of the first section of wristband 11 and the second section of wristband 12 which are overlapped are fixed.

FIG. 6 is a flowchart of a control method of a wearable device according to some embodiments of the present disclosure.

According to another aspect of the embodiments of the present disclosure, as shown in FIG. 6, there is provided a control method 200 of a wearable device, which is applied to the wearable device 100 implemented in the first aspect described above, and the control method 200 includes steps S11 and S12.

In step S11, the connection information of the first interface 13 and the connection information of the second interface 14 are obtained.

The connection information may include the connection state of the first interface 13 and the connection state of the second interface 14. During connection, the connection state of the first interface may be that the first interface is connected to a power adapter or a terminal device. The connection state of the second interface 14 may be that the second interface 14 is connected to a terminal device.

In an example, the step S11 includes: detecting the micro-current of the first interface 13 and the micro-current of the second interface 14; determining the connection information of the first interface 13 according to the micro-current of the first interface 13; and determining the connection information of the second interface according to the micro-current of the second interface 14.

A chip can be provided inside the wearable device 100, and detects the current flowing into the first interface 13. When the first interface 13 is connected to other devices, it will receive a micro-current, but when the first interface 13 is not connected to other devices, it will not receive the micro-current, and the chip determines what type of device the connected device is, for example, determines that the connected device is a terminal device or a power adapter, based on the predetermined protocol. If the chip detects that the first interface 13 is connected to the terminal device or the power adapter, the chip in the wearable device 100 detects the micro-current of the second interface to determine whether the second interface 14 is connected to the other terminal device.

In step S12, the working mode of the wearable device 100 is determined according to the connection information of the first interface 13 and the connection information of the second interface 14, wherein the working mode may include at least one of the following: charging the main body through the power supply; charging the second terminal device via the wearable device through a power adapter; and performing data transmission through the wearable device, by a third terminal device and a fourth terminal device.

According to the different connection states of the wearable device 100, different connection modes are adopted to realize functions such as charging or data transmission. The wearable device 100 can be used to conveniently realize various functions without manual setting by the user.

The connection mode may be that the first interface 13 is electrically conducted with the rechargeable battery inside the main body 20 of the bracelet, such that when the first interface 13 is connected to a power adapter or a terminal device, the wearable device is charged.

The connection mode may also be that the first interface 13 is electrically conducted with the second interface 14, and the first interface 13 is disconnected from the rechargeable battery inside the main body 20 of the bracelet, such that when the chip in the wearable device detects that the first interface 13 is connected to the power adapter, and detects that the second interface 14 is connected to a terminal device, the wearable device is controlled to enter the terminal device charging mode, and the terminal device is charged via the wearable device 100 through the power adapter.

The connection mode may also be that the first interface 13 is electrically conducted with the second interface 14, such that when the smart chip detects that the first interface 13 and the second interface 14 are respectively connected to one terminal device, the two terminal devices perform data transmission through the wearable device.

Through the above method, the wearable device of the present disclosure can have multiple functions such as self-charging, as a charging line to realize the charging of the terminal device, and as a data line to realize data transmission between two terminal devices, which greatly improves the convenience of users and enhances the user experience. In some embodiments, the step S12 includes: when the connection information of the first interface 13 is that the first interface 13 is connected to a power supply, and the second interface 14 is not connected to the first terminal device, the main body 20 of the bracelet is charged through the power supply. Herein, the power supply may be a power adapter or a fifth terminal device.

In an example, the chip in the wearable device 100 can be used to detect whether the first interface 13 is connected to the terminal device, and whether the second interface 14 is connected to the terminal device. If it is detected that the first interface 11 is connected to a terminal device (the fifth terminal device), and the second interface 14 is not connected to the other terminal device (the first terminal device), the chip in the main body of the bracelet performs a control such that the first interface 13 is electrically conducted with the rechargeable battery inside the main body of the bracelet, such that the wearable device 100 is charged through the terminal device (the fifth terminal device) connected with the first interface.

In addition, in this case, the wearable device 100 can also perform data transmission with the terminal device, for example, the data from the terminal device is stored through the wearable device, or the data from the wearable device is received by the terminal device.

In another example, when the wearable device detects that the first interface 13 is connected to the power adapter and the second interface 14 is not connected to the other terminal device, at this time, the chip in the main body of the bracelet performs a control such that the first interface 13 is electrically conducted with the rechargeable battery inside the main body of the bracelet, thereby the wearable device 100 is charged through the power adapter.

Compared with the traditional method in which the main body of the bracelet is disassembled and then placed in a matching charging dock for charging, the present disclosure does not need to disassemble the main body of the bracelet when the wearable device needs to be charged through the above method, and the wearable device can be charged more conveniently through the first interface 13 on the wristband of the wearable device to improve the convenience.

In some embodiments, step S12 may further include: when the connection information of the first interface 13 is that the first interface 13 is connected to the power adapter, and the second interface 14 is connected to the second terminal device, determining that the working mode is: enabling the second terminal device to be charged via the wearable device through the power adapter.

When the wearable device detects that the first interface 13 is connected to the power adapter and the second interface 14 is connected to the terminal device, at this time, the chip in the main body of the bracelet controls the first interface to be electrically conducted with the second interface, at the same time, the electrical connection path between the first interface and the rechargeable battery inside the main body of the bracelet is disconnected, such that the terminal device (second terminal device) connected to the second interface 14 is charged via the wearable device through the power adapter.

The wearable device is used as the power charging line to realize the function of charging the terminal device to be charged, when the user forgets, loses or damages the charging line, the wearable device can serve as the charging line for emergency use, which has great convenience.

In another embodiment, the step S12 may further include: when the connection information of the first interface is that the first interface 13 is connected to the third terminal device, and the second interface 14 is connected to the fourth terminal device, determining that the working mode is: performing data transmission by the third terminal device and the fourth terminal device through the wearable device.

When the wearable device detects that the first interface 13 is connected to one terminal device (the third terminal device), and the second interface 14 is connected to the other terminal device (the fourth terminal device), at this time, the chip in the main body of the bracelet controls the first interface to be electrically conducted with the second interface, such that the terminal device connected to the first interface and the terminal device connected to the second interface perform data transmission through the wearable device.

The wearable device serves as the data line to realize the data transmission function of the two terminal devices, which greatly improves the convenience.

In view of the above, through the control method of the wearable device of the present disclosure, the wearable device has multiple functions such as self-charging, as a charging line to charge the terminal device, and as a data line to charge the two terminal devices, which greatly improves the convenience of users and enhances the user experience.

Various embodiments of the present disclosure can have one or more of the following advantages.

By providing two interfaces on the device on the wristband of the wearable device, in a state in which one interface is connected to the power source and the other interface is not connected to the terminal device, the wearable device itself is charged through the interface connected to the power source without using a dedicated charging base, and charging is more convenient.

It can be understood that the "multiple" in the disclosure means two or more, and other quantifiers are similar. "And/or" describes the relationship of the related objects, indicating that there may be three relationships, for example, A and/or B may indicate three cases: A exists alone, A and B exist simultaneously, and B exists alone. The character "/" generally indicates that the relationship between the contextually relevant objects is a "or" relationship. The singular forms "a," "an," "said," and "the" are also intended to include the plural forms unless the context clearly indicates otherwise.

It can be further understood that although the terms such as "first" and "second" and the like are used to describe various information, such information should not be limited by these terms. The terms are only used to distinguish the same type of information from each other, and do not indicate a specific order or importance. In fact, the expressions such as "first" and "second" and the like can be used interchangeably. For instance, first information can also be referred to as second information without departing from the scope of the disclosure, and similarly, the second information can also be referred to as the first information.

It can be further understood that the orientation or positional relationship indicated by the terms "center", "vertical", "horizontal", "front", "rear", "upper", "lower", "left", "right", "vertical", "horizontal", "top", "bottom", "inner", "outer", etc. is the orientation or positional relationship based on the drawings, which are only for the convenience of describing the embodiment and simplifying the description, rather than indicating or implying that the device or element referred to must have a specific orientation, or be constructed and operated in a specific orientation.

The various device components, units, circuits, blocks, or portions may have modular configurations, or are composed of discrete components, but nonetheless may be referred to as "modules," "components" or "circuits" in general. In other words, the components, units, circuits, blocks, or portions referred to herein may or may not be in modular forms, and these phrases may be interchangeably used.

The various device components, units, blocks, portions, or modules may be realized with hardware, software, or a combination of hardware and software.

In some embodiments of the present disclosure, the terms "installed," "connected," "coupled," "fixed" and the like shall be understood broadly, and can be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in some embodiments of the present disclosure can be understood by those of ordinary skill in the art on a case-by-case basis.

In the description of the present disclosure, the terms "one embodiment," "some embodiments," "example," "specific example," or "some examples," and the like can indicate a specific feature described in connection with the embodiment or example, a structure, a material or feature included in at least one embodiment or example. In some embodiments of the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or retracted from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), TFT (thin-film transistor), plasma, other flexible configuration, or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are possible within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and acts corresponding to, the disclosed aspects of the example embodiments, in addition to those described above, can be made by a person of ordinary skill in the art, having the benefit of the present disclosure, without departing from the scope of the disclosure defined in the following claims.

Some other embodiments of the present disclosure can be available to those skilled in the art upon consideration of the specification and practice of the various embodiments disclosed herein. The specification and examples can be shown as illustrative only, and the true scope of the disclosure is indicated by the following claims.

## Claims

1. A wearable device (100), comprising:
a wristband (10), comprising a first section (11) of wristband with a first interface (13), and a second section (12) of wristband with a second interface (14); and
a main body (20) on the wristband (10) and electrically connected to the first interface (13) and the second interface (14),
**characterized in that** the wearable device is configured such that,
when the first interface (13) is connected to a power supply and the second interface (14) is not connected to a first terminal device, a chip in the main body (20) determines that the wearable device (100) is in a self-charging mode, the first interface (13) is connected with a rechargeable battery inside the wearable device, and the main body (20) is charged through the power supply, and
wherein the power supply includes a power adapter, and
when the first interface (13) is connected to the power adapter and the second interface (14) is connected to a second terminal device, the chip in the main body (20) determines that the wearable device (100) is in a terminal device charging mode, the first interface (13) is electrically conducted with the second interface (14), and the second terminal device is charged via the wearable device (100) through the power adapter.

2. The wearable device (100) according to claim 1, further configured such that when the first interface (13) is connected to a third terminal device and the second interface (14) is connected to a fourth terminal device, the third terminal device and the fourth terminal device perform data transmission through the wearable device (100).

3. The wearable device (100) according to claim 1, wherein
the wearable device (100) further comprises a conductive portion on the wristband (10), and
the first interface (13) is connected to a charging stand of the main body (20) through the conductive portion.

4. The wearable device (100) according to claim 3, further comprising:
a first charging line (17) in the first section (11) of wristband, and one end of the first charging line (17) being connected to a power supply pin of the first interface (13), and the other end being connected to the conductive portion; and
a second charging line (18) in the second section (12) of wristband, and one end of the second charging line (18) being connected to the conductive portion, and the other end being connected to the second interface (14).

5. The wearable device (100) according to claim 4, further comprising:
a transmission line (16) in the wristband (11), and one end of the transmission line (16) being connected to a data transmission pin of the first interface (13), and the other end being connected to the second interface (14).

6. The wearable device (100) according to claim 5, wherein
the first interface (13) includes a first pin, a second pin, a third pin, and a fourth pin;
the first pin is configured to connect to a power supply;
the second pin and the third pin are configured for data transmission; and
the fourth pin is configured for grounding;
wherein
one end of the first charging line (17) is electrically connected to the first pin and the fourth pin, respectively; and
one end of the transmission line (16) is electrically connected to the second pin and the third pin, respectively.

7. The wearable device (100) according to claim 4, wherein
the first interface (13) is a Type-A interface; and
the second interface (14) is a Type-C interface.

8. The wearable device (100) according to claim 1, wherein
the first interface (13) and the second interface (14) are both universal serial bus interfaces.

9. The wearable device (100) according to any of claims 1-8, wherein
the first section (11) of wristband has a first protective sleeve (40);
the second section (12) of wristband has a second protective sleeve (30); and
when the first section (11) of wristband and the second section (12) of wristband are fixedly connected, the second protective sleeve (30) is sleeved with the first interface (13), and the first protective sleeve (40) is sleeved with the second interface (14).

10. The wearable device (100) according to any of claims 1-8, wherein
a plurality of fixing apertures is in one of the first section of wristband and the second section of wristband, and
a buckle is on the other of the first section of wristband and the second section of wristband, and the buckle can buckle any one of the fixing apertures, such that the first section of wristband and the second section of wristband are fixedly connected.

11. A control method (200), applied to the wearable device according to any of claims 1-10, and the control method comprising:
obtaining (S11) connection information of the first interface and connection information of the second interface;
determining (S12) a working mode of the wearable device according to the connection information of the first interface and the connection information of the second interface, wherein the working mode includes at least one of:
charging the main body through the power supply;
charging a second terminal device via the wearable device through a power adapter; and
performing, by a third terminal device and a fourth terminal device, data transmission through the wearable device.

12. The control method (200) according to claim 11, wherein the obtaining connection information of the first interface and connection information of the second interface comprises:
detecting a micro-current of the first interface and a micro-current of the second interface;
determining the connection information of the first interface according to the micro-current of the first interface; and
determining the connection information of the second interface according to the micro-current of the second interface.

13. The control method (200) according to claim 11, wherein the determining a working mode of the wearable device according to the connection information of the first interface and the second interface comprises:
when the connection information of the first interface is that the first interface is connected to a power supply, and the connection information of the second interface is that the second interface is not connected to a first terminal device, determining that the working mode is that the main body is charged through the power supply.

14. The control method (200) according to claim 11, wherein the determining the working mode of the wearable device according to the connection information of the first interface and the connection information of the second interface comprises:
when the connection information of the first interface is that the first interface is connected to the power adapter, and the connection information of the second interface is that the second interface is connected to the second terminal device, determining that the working mode is that the second terminal device is charged via the wearable device through the power adapter; and
when the connection information of the first interface is that the first interface is connected to the third terminal device, and the connection information of the second interface is that the second interface is connected to the fourth terminal device, determining that the working mode is that the third terminal device and the fourth terminal device perform data transmission through the wearable device.

## Patentansprüche

1. Tragbare Vorrichtung (100), die aufweist:
ein Armband (10), das einen ersten Abschnitt (11) des Armbands mit einer ersten Schnittstelle (13) und einen zweiten Abschnitt (12) des Armbands mit einer zweiten Schnittstelle (14) aufweist; und
einen Hauptkörper (20) an dem Armband (10), der elektrisch mit der ersten Schnittstelle (13) und der zweiten Schnittstelle (14) verbunden ist,
**dadurch gekennzeichnet, dass** die tragbare Vorrichtung so ausgebildet ist, dass, wenn die erste Schnittstelle (13) mit einem Netzteil verbunden ist und die zweite Schnittstelle (14) nicht mit einem ersten Endgerät verbunden ist, ein Chip in dem Hauptkörper (20) bestimmt, dass sich die tragbare Vorrichtung (100) in einem Selbstlademodus befindet, wobei die erste Schnittstelle (13) mit einer wiederaufladbaren Batterie in der tragbaren Vorrichtung verbunden ist, und wobei der Hauptkörper (20) über das Netzteil geladen wird, und
wobei das Netzteil einen Netzadapter aufweist, und
wenn die erste Schnittstelle (13) mit dem Netzadapter verbunden ist und die zweite Schnittstelle (14) mit einem zweiten Endgerät verbunden ist, der Chip in dem Hauptkörper (20) bestimmt, dass die tragbare Vorrichtung (100) in einem Endgerät-Lademodus ist, wobei die erste Schnittstelle (13) mit der zweiten Schnittstelle (14) elektrisch verbunden ist, und wobei das zweite Endgerät über die tragbare Vorrichtung (100) durch den Netzadapter geladen wird.

2. Tragbare Vorrichtung (100) nach Anspruch 1, die ferner so ausgebildet ist, dass, wenn die erste Schnittstelle (13) mit einem dritten Endgerät verbunden ist und die zweite Schnittstelle (14) mit einem vierten Endgerät verbunden ist, das dritte Endgerät und das vierte Endgerät eine Datenübertragung über die tragbare Vorrichtung (100) durchführen.

3. Tragbare Vorrichtung (100) nach Anspruch 1, wobei
die tragbare Vorrichtung (100) ferner einen leitfähigen Teil am Armband (10) aufweist, und
die erste Schnittstelle (13) mit einer Ladestation des Hauptkörpers (20) über den leitfähigen Teil verbunden ist.

4. Tragbare Vorrichtung (100) nach Anspruch 3, die ferner aufweist:
eine erste Ladeleitung (17) in dem ersten Abschnitt (11) des Armbands, und wobei ein Ende der ersten Ladeleitung (17) mit einem Netzteil-Pin der ersten Schnittstelle (13) verbunden ist, und wobei das andere Ende mit dem leitfähigen Teil verbunden ist; und
eine zweite Ladeleitung (18) in dem zweiten Abschnitt (12) des Armbands, und wobei ein Ende der zweiten Ladeleitung (18) mit dem leitfähigen Teil verbunden ist, und wobei das andere Ende mit der zweiten Schnittstelle (14) verbunden ist.

5. Tragbare Vorrichtung (100) nach Anspruch 4, die ferner aufweist:
eine Übertragungsleitung (16) in dem Armband (11), und wobei ein Ende der Übertragungsleitung (16) mit einem Datenübertragungspin der ersten Schnittstelle (13) verbunden ist, und wobei das andere Ende mit der zweiten Schnittstelle (14) verbunden ist.

6. Tragbare Vorrichtung (100) nach Anspruch 5, wobei
die erste Schnittstelle (13) einen ersten Pin, einen zweiten Pin, einen dritten Pin, und einen vierten Pin aufweist;
der erste Pin so ausgebildet ist, dass er sich mit einem Netzteil verbindet;
der zweite Pin und der dritte Pin für die Datenübertragung ausgebildet sind; und
der vierte Pin für die Erdung ausgebildet ist;
wobei
ein Ende der ersten Ladeleitung (17) mit dem ersten Pin bzw. dem vierten Pin elektrisch verbunden ist; und
ein Ende der Übertragungsleitung (16) mit dem zweiten Pin bzw. dem dritten Pin elektrisch verbunden ist.

7. Tragbare Vorrichtung (100) nach Anspruch 4, wobei
die erste Schnittstelle (13) eine Typ-A-Schnittstelle ist; und
die zweite Schnittstelle (14) eine Typ-C-Schnittstelle ist.

8. Tragbare Vorrichtung (100) nach Anspruch 1, wobei
die erste Schnittstelle (13) und die zweite Schnittstelle (14) beide Universal-Serial-Bus-Schnittstellen sind.

9. Tragbare Vorrichtung (100) nach einem der Ansprüche 1-8, wobei
der erste Abschnitt (11) des Armbands eine erste Schutzhülse (40) aufweist; der zweite Abschnitt (12) des Armbands eine zweite Schutzhülse (30) aufweist; und
wenn der erste Abschnitt (11) des Armbands und der zweite Abschnitt (12) des Armbands fest verbunden sind, die zweite Schutzhülse (30) mit der ersten Schnittstelle (13) umhüllt wird, und die erste Schutzhülse (40) mit der zweiten Schnittstelle (14) umhüllt wird.

10. Tragbare Vorrichtung (100) nach einem der Ansprüche 1-8, wobei
eine Vielzahl von Befestigungsöffnungen in einem aus dem ersten Abschnitt des Armbands und dem zweiten Abschnitt des Armbands vorhanden ist, und eine Schnalle auf dem jeweils anderen aus dem ersten Abschnitt des Armbands und dem zweiten Abschnitt des Armbands vorhanden ist und die Schnalle in eine Beliebige der Vielzahl von Befestigungsöffnungen einrasten kann, so dass der erste Abschnitt des Armbands und der zweite Abschnitt des Armbands fest verbunden sind.

11. Steuerverfahren (200), das bei einer tragbaren Vorrichtung nach einem der Ansprüche 1-10 angewendet wird, und wobei das Steuerverfahren umfasst:
Erhalten (S11) von Verbindungsinformationen der ersten Schnittstelle und von Verbindungsinformationen der zweiten Schnittstelle;
Bestimmen (S12) eines Arbeitsmodus der tragbaren Vorrichtung entsprechend den Verbindungsinformationen der ersten Schnittstelle und den Verbindungsinformationen der zweiten Schnittstelle, wobei der Arbeitsmodus mindestens eines aus Folgendem umfasst:
Laden des Hauptkörpers über das Netzteil;
Laden eines zweiten Endgeräts über die tragbare Vorrichtung durch einen Netzadapter; und
Durchführen, mittels eines dritten Endgeräts und eines vierten Endgeräts, einer Datenübertragung über die tragbare Vorrichtung.

12. Steuerverfahren (200) nach Anspruch 11, wobei das Erhalten von Verbindungsinformationen der ersten Schnittstelle und von Verbindungsinformationen der zweiten Schnittstelle umfasst:
Detektieren eines Mikrostroms der ersten Schnittstelle und eines Mikrostroms der zweiten Schnittstelle;
Bestimmen der Verbindungsinformationen der ersten Schnittstelle entsprechend dem Mikrostrom der ersten Schnittstelle; und
Bestimmen der Verbindungsinformationen der zweiten Schnittstelle entsprechend dem Mikrostrom der zweiten Schnittstelle.

13. Steuerverfahren (200) nach Anspruch 11, wobei das Bestimmen eines Arbeitsmodus der tragbaren Vorrichtung entsprechend den Verbindungsinformationen der ersten Schnittstelle und den Verbindungsinformationen der zweiten Schnittstelle umfasst:
wenn die Verbindungsinformationen der ersten Schnittstelle angeben, dass die erste Schnittstelle mit einem Netzteil verbunden ist, und wenn die Verbindungsinformationen der zweiten Schnittstelle angeben, dass die zweite Schnittstelle nicht mit dem ersten Endgerät verbunden ist, Bestimmen, dass der Arbeitsmodus ist, das der Hauptkörper über das Netzteil geladen wird.

14. Steuerverfahren (200) nach Anspruch 11, wobei das Bestimmen des Arbeitsmodus der tragbaren Vorrichtung entsprechend den Verbindungsinformationen der ersten Schnittstelle und den Verbindungsinformationen der zweiten Schnittstelle umfasst:
wenn die Verbindungsinformationen der ersten Schnittstelle angeben, dass die erste Schnittstelle mit dem Netzadapter verbunden ist, und die Verbindungsinformationen der zweiten Schnittstelle angeben, dass die zweite Schnittstelle mit dem zweiten Endgerät verbunden ist, Bestimmen, dass der Arbeitsmodus ist, dass das zweite Endgerät über die tragbare Vorrichtung durch den Netzadapter geladen wird; und
wenn die Verbindungsinformationen der ersten Schnittstelle angeben, dass die erste Schnittstelle mit dem dritten Endgerät verbunden ist, und die Verbindungsinformationen der zweiten Schnittstelle angeben, dass die zweite Schnittstelle mit dem vierten Endgerät verbunden ist, Bestimmen, dass der Arbeitsmodus ist, dass das dritte Endgerät und das vierte Endgerät eine Datenübertragung über die tragbare Vorrichtung durchführen.

## Revendications

1. Dispositif pouvant être porté (100), comprenant :
un bracelet (10), comprenant une première section (11) de bracelet dotée d'une première interface (13), et une seconde section (12) de bracelet dotée d'une seconde interface (14) ; et
un corps principal (20) situé sur le bracelet (10) et connecté électriquement à la première interface (13) et à la seconde interface (14),
**caractérisé en ce que** le dispositif pouvant être porté est configuré de sorte que,
lorsque la première interface (13) est connectée à un bloc d'alimentation et que la seconde interface (14) n'est pas connectée à un premier dispositif terminal, une puce située dans le corps principal (20) détermine que le dispositif pouvant être porté (100) est dans un mode d'auto-charge, que la première interface (13) est connectée à une batterie rechargeable située à l'intérieur du dispositif pouvant être porté, et que le corps principal (20) est chargé par l'intermédiaire du bloc d'alimentation, et
dans lequel le bloc d'alimentation comprend un adaptateur de courant, et
lorsque la première interface (13) est connectée à l'adaptateur de courant et que la seconde interface (14) est connectée à un deuxième dispositif terminal, la puce située dans le corps principal (20) détermine que le dispositif pouvant être porté (100) est dans un mode de charge de dispositif terminal, que la première interface (13) est en conduction électrique avec la seconde interface (14), et que le deuxième dispositif terminal est chargé par le biais du dispositif pouvant être porté (100) par l'intermédiaire de l'adaptateur de courant.

2. Dispositif pouvant être porté (100) selon la revendication 1, configuré en outre de sorte que
lorsque la première interface (13) est connectée à un troisième dispositif terminal et que la seconde interface (14) est connectée à un quatrième dispositif terminal, le troisième dispositif terminal et le quatrième dispositif terminal effectuent une transmission de données par l'intermédiaire du dispositif pouvant être porté (100).

3. Dispositif pouvant être porté (100) selon la revendication 1, dans lequel
le dispositif pouvant être porté (100) comprend en outre une partie conductrice située sur le bracelet (10), et
la première interface (13) est connectée à une base de charge du corps principal (20) par l'intermédiaire de la partie conductrice.

4. Dispositif pouvant être porté (100) selon la revendication 3, comprenant en outre :
une première ligne de charge (17) située dans la première section (11) de bracelet, et une extrémité de la première ligne de charge (17) étant connectée à une broche de bloc d'alimentation de la première interface (13), et l'autre extrémité étant connectée à la partie conductrice ; et
une seconde ligne de charge (18) située dans la seconde section (12) de bracelet, et une extrémité de la seconde ligne de charge (18) étant connectée à la partie conductrice, et l'autre extrémité étant connectée à la seconde interface (14).

5. Dispositif pouvant être porté (100) selon la revendication 4, comprenant en outre :
une ligne de transmission (16) située dans le bracelet (11), et une extrémité de la ligne de transmission (16) étant connectée à une broche de transmission de données de la première interface (13), et l'autre extrémité étant connectée à la seconde interface (14).

6. Dispositif pouvant être porté (100) selon la revendication 5, dans lequel
la première interface (13) comprend une première broche, une deuxième broche, une troisième broche et une quatrième broche ;
la première broche est configurée pour une connexion à un bloc d'alimentation ;
la deuxième broche et la troisième broche sont configurées pour une transmission de données ; et
la quatrième broche est configurée pour une mise à la masse ;
dans lequel
une extrémité de la première ligne de charge (17) est connectée électriquement respectivement à la première broche et à la quatrième broche ; et
une extrémité de la ligne de transmission (16) est connectée électriquement respectivement à la deuxième broche et à la troisième broche.

7. Dispositif pouvant être porté (100) selon la revendication 4, dans lequel
la première interface (13) est une interface de type A ; et
la seconde interface (14) est une interface de type C.

8. Dispositif pouvant être porté (100) selon la revendication 1, dans lequel
la première interface (13) et la seconde interface (14) sont toutes les deux des interfaces de bus série universel.

9. Dispositif pouvant être porté (100) selon l'une quelconque des revendications 1 à 8, dans lequel
la première section (11) de bracelet comporte un premier manchon de protection (40) ;
la seconde section (12) de bracelet comporte un second manchon de protection (30) ; et
lorsque la première section (11) de bracelet et la seconde section (12) de bracelet sont reliées solidairement, le second manchon de protection (30) est manchonné sur la première interface (13), et le premier manchon de protection (40) est manchonné sur la seconde interface (14).

10. Dispositif pouvant être porté (100) selon l'une quelconque des revendications 1 à 8, dans lequel
plusieurs ouvertures de fixation sont ménagées dans l'une de la première section de bracelet et de la seconde section de bracelet, et
une boucle est située sur l'autre de la première section de bracelet et de la seconde section de bracelet, et la boucle peut être bouclée sur l'une quelconque des ouvertures de fixation, de façon à relier solidairement la première section de bracelet et la seconde section de bracelet.

11. Procédé de commande (200), appliqué au dispositif pouvant être porté selon l'une quelconque des revendications 1 à 10, et le procédé de commande comprenant les étapes consistant à :
obtenir (S11) des informations de connexion de la première interface et des informations de connexion de la seconde interface ;
déterminer (S12) un mode de travail du dispositif pouvant être porté conformément aux informations de connexion de la première interface et aux informations de connexion de la seconde interface, dans lequel le mode de travail consiste au moins à :
charger le corps principal par l'intermédiaire du bloc d'alimentation ;
charger un deuxième dispositif terminal par le biais du dispositif pouvant être porté par l'intermédiaire d'un adaptateur de courant ; et
effectuer, par un troisième dispositif terminal et par un quatrième dispositif terminal, une transmission de données par l'intermédiaire du dispositif pouvant être porté.

12. Procédé de commande (200) selon la revendication 11, dans lequel l'étape d'obtention d'informations de connexion de la première interface et d'informations de connexion de la seconde interface consiste à :
détecter un micro-courant de la première interface et un micro-courant de la seconde interface ;
déterminer les informations de connexion de la première interface conformément au micro-courant de la première interface ; et
déterminer les informations de connexion de la seconde interface conformément au micro-courant de la seconde interface.

13. Procédé de commande (200) selon la revendication 11, dans lequel l'étape de détermination d'un mode de travail du dispositif pouvant être porté conformément aux informations de connexion de la première interface et de la seconde interface consiste à :
lorsque les informations de connexion de la première interface sont telles que la première interface est connectée à un bloc d'alimentation, et que les informations de connexion de la seconde interface sont telles que la seconde interface n'est pas connectée à un premier dispositif terminal, déterminer que le mode de travail est tel que le corps principal est chargé par l'intermédiaire du bloc d'alimentation.

14. Procédé de commande (200) selon la revendication 11, dans lequel l'étape de détermination du mode de travail du dispositif pouvant être porté conformément aux informations de connexion de la première interface et aux informations de connexion de la seconde interface consiste à :
lorsque les informations de connexion de la première interface sont telles que la première interface est connectée à l'adaptateur de courant, et que les informations de connexion de la seconde interface sont telles que la seconde interface est connectée au deuxième dispositif terminal, déterminer que le mode de travail est tel que le deuxième dispositif terminal est chargé par le biais du dispositif pouvant être porté par l'intermédiaire de l'adaptateur de courant ; et
lorsque les informations de connexion de la première interface sont telles que la première interface est connectée au troisième dispositif terminal, et que les informations de connexion de la seconde interface sont telles que la seconde interface est connectée au quatrième dispositif terminal, déterminer que le mode de travail est tel que le troisième dispositif terminal et le quatrième dispositif terminal effectuent une transmission de données par l'intermédiaire du dispositif pouvant être porté.
